(19)

Europäisches
Patentamt
European
Patent Office
Office européen
des brevets

(11)  **EP 4 375 059 A1**

(12)  # EUROPEAN PATENT APPLICATION
published in accordance with Art. 153(4) EPC

(43)  Date of publication:
**29.05.2024  Bulletin 2024/22**

(21)  Application number: **22845754.5**

(22)  Date of filing: **29.06.2022**

(51)  International Patent Classification (IPC):
**B32B 5/18** (2006.01)        **B32B 27/32** (2006.01)
**H01M 50/417** (2021.01)      **H01M 50/449** (2021.01)
**H01M 50/489** (2021.01)      **H01M 50/491** (2021.01)
**H01M 50/494** (2021.01)

(52)  Cooperative Patent Classification (CPC):
**B32B 5/18; B32B 27/32; H01M 50/417;
H01M 50/449; H01M 50/489; H01M 50/491;
H01M 50/494;** Y02E 60/10

(86)  International application number:
**PCT/JP2022/025911**

(87)  International publication number:
**WO 2023/002818 (26.01.2023 Gazette 2023/04)**

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30)  Priority: **19.07.2021  JP 2021118448**

(71)  Applicant: **Toray Industries, Inc.
Tokyo 103-8666 (JP)**

(72)  Inventors:
• **CHEN, Yanzi
  Nasushiobara-shi, Tochigi 329-2763 (JP)**
• **KANEKO, Kei
  Nasushiobara-shi, Tochigi 329-2763 (JP)**
• **NAKAJIMA, Konomi
  Nasushiobara-shi, Tochigi 329-2763 (JP)**

(74)  Representative: **Kador & Partner Part mbB
Corneliusstraße 15
80469 München (DE)**

(54)  ## POLYOLEFIN MULTILAYER MICROPOROUS MEMBRANE, LAMINATED POLYOLEFIN MULTILAYER MICROPOROUS MEMBRANE, AND BATTERY SEPARATOR

(57)  The purpose of the present invention is to provide a polyolefin microporous membrane having excellent balance among ionic permeability, compression resistance, withstand voltage characteristics, and deformation adaptability to an electrode volume change. The present invention is a polyolefin multilayer microporous membrane obtained by laminating a first microporous layer containing polypropylene and polyethylene and a second microporous layer containing polyethylene, wherein: in a temperature-melting endothermic amount curve obtained through measurement with a differential scanning calorimeter (DSC), $(\Delta H1-\Delta H2)/\Delta H2 \times 100 \geq 20$, where $\Delta H1$ is the melting endothermic amount of polyethylene during first melting in the temperature range of 0-157°C, and $\Delta H2$ is the melting endothermic amount of polyethylene during second melting; when the content of the polyolefin in the first microporous layer is 100 mass% in the AFM-IR measurement of the cross section of the polyolefin multilayer microporous membrane, the content ratio of the polypropylene in the first microporous layer is 10-50 mass% (exclusive of 50); and the porosity is 35-70%.

**EP 4 375 059 A1**

**Description**

TECHNICAL FIELD

The present invention relates to a polyolefin multilayer microporous membrane, a laminated polyolefin multilayer microporous membrane, and a battery separator.

BACKGROUND ART

Polyolefin microporous membranes are used in various fields, for example, as filters such as filtration membranes and dialysis membranes, battery separators, separators for electrolytic capacitors, and the like. Among them, polyolefin microporous membranes are widely used as a secondary battery separator, and are each interposed between a positive electrode and a negative electrode to be able to prevent short circuit due to the contact between the active materials of both electrodes, and can form paths for ion conduction through an electrolytic solution held in pores.

When the polyolefin microporous membrane is used particularly as a lithium ion battery separator, the performance thereof is deeply related to battery characteristics, battery productivity, and battery safety. Therefore, polyolefin microporous membranes are required to have excellent permeability, mechanical characteristics, resistant to heat shrinkage, shutdown characteristics, meltdown characteristics, and the like.

In recent years, with an increase in energy density of a lithium ion secondary battery, a silicon-based negative electrode that repeats expansion/contraction in which a volume change rate due to charging and discharging is 300% or more has been developed. In addition, with the recent increase in the life of mobile phones and electric vehicles, secondary batteries are required to have cycle characteristics that a capacity at the same level as that at the initial stage of battery use is maintained even when charging and discharging are repeated many times, and therefore separators having high adaptability to a negative electrode volume change are required.

Manufacture processes of secondary batteries include a hot pressing step. In particular, due to an increase in the volume of an electrode accompanying a recent increase in the density of secondary batteries, the pressure applied to a separator at the time of manufacturing a battery tends to increase. In a compressed separator, the membrane thickness is reduced, so that resistance to short-circuiting caused by process foreign matter may be reduced, or the air permeability is reduced, so that battery rate characteristics may be deteriorated. Therefore, separators are required to have improved compression resistance.

Furthermore, separators are required to have sufficient through-holes for lithium ion permeation. In recent years, high rate charge/discharge exceeding 10C is also required, and higher lithium ionic permeability is required.

As safety, withstand voltage characteristics of separator are also regarded as important performance. The withstand voltage characteristics is an index indicating whether or not a separator can endure without allowing a short circuit to occur when a certain voltage is applied to the separator. When the withstand voltage of a separator is low, it tends to be difficult to effectively prevent self-discharge when the separator is used for a battery, and the long-term preservability of the battery may be poor. In addition, when the withstand voltage of the separator is low, the short-circuit rate of the battery increases, so that the yield decreases, and the process suitability may deteriorate.

Patent Document 1 discloses a polyolefin multilayer microporous membrane excellent in balance among permeability, mechanical strength, meltdown characteristics, electrolyte solution absorbability, and electrolyte solution retainability, in which membrane a first layer is formed of a first polyolefin (PO) containing polypropylene (PP) or a mixture of 50 mass% or more of PP and a polyethylene (PE)-based resin, a second layer is formed of a second PO containing 7 mass% or less of ultrahigh molecular weight PE having an Mw of $1 \times 10^6$ or more and 50 mass% or less of PP, and an average pore diameter of the second layer is larger than an average pore diameter of the first layer.

Patent Document 2 discloses a separator with improved permeability and compression resistance, the separator comprising polypropylene and polyethylene, having an air permeability of 700 seconds/100 cm$^3$ or less in terms of a membrane thickness of 20 um, and having a puncture strength of 2,000 mN or more in terms of a membrane thickness of 20 $\mu$m.

Patent Document 3 discloses a polyolefin multilayer microporous membrane having a dense pore structure having a pore denseness of 4 or more as measured by mercury intrusion porosimetry and a withstand voltage of 1.4 kV/11.5 um or more.

Patent Document 4 discloses a multilayer membrane in which a first layer formed of a resin composition (I) and a second layer formed of a resin composition (II) are laminated. By setting the mp difference between the melting points mp (I) and mp (II) to less than 10°C, setting the Mv difference between Mv (I) and Mv (II) to 500,000 or less, and setting the Mv ratio of Mv (I) to Mv (II) to less than 5, interlayer disturbance can be inhibited, the pore structure can be suitably maintained, and the withstand voltage characteristics are improved.

Patent Document 5 also discloses that a multilayer separator having a puncture strength of 170 gf/10 um or more is obtained by setting the polypropylene contained in a layer A to 0 mass% or more and less than 3 mass% and setting the content of polypropylene in a layer B to 1 mass% or more and less than 30 mass%.

Patent Document 6 discloses a polyolefin microporous membrane having an air permeability of 30 to 400 seconds/100 cm$^3$/20 um, a porosity of 25 to 80%, an average pore diameter of 0.01 to 1.0 um, a membrane thickness change rate after heat compression at 2.2 MPa and 90°C for 5 minutes of 15% or more, and an air permeability of 700 seconds/100 cm$^3$/20 um or less after the heat compression.

PRIOR ART DOCUMENTS

PATENT DOCUMENTS

Patent Document 1: JP 2008-255307 A
Patent Document 2: WO 2014/192862 A
Patent Document 3: WO 2013/146403 A
Patent Document 4: JP 2010-036355 A
Patent Document 5: JP 2019-072901 A
Patent Document 6: WO 2006/106783 A

SUMMARY OF THE INVENTION

PROBLEMS TO BE SOLVED BY THE INVENTION

In order to attain cycle characteristics, process foreign substance resistance, rate characteristics, and self-discharge characteristics of batteries, separators are required to have adaptability to an electrode volume change, compression resistance, ionic permeability, and withstand voltage property. However, when the number or the volume of through-holes of a separator is increased for the purpose of lithium ionic permeability, the amount of resin per unit area decreases, leading to deterioration of compressibility and withstand voltage characteristics of the separator. That is, it has been difficult to simultaneously satisfy high ionic permeability, high compression resistance, and high withstand voltage characteristics. It is an important technical problem with a microporous membrane for a separator to impart such various characteristics to the microporous membrane in a well-balanced manner.

Here, the compression resistance required for a separator is a characteristic that the thickness change of the separator is small during hot pressing in a battery manufacture process. On the other hand, it is conceivable to inhibit the expansion of a battery caused by increase in volume expansion of an electrode during charging and discharging, the increase in volume expansion accompanying the recent increase in battery capacity, by increasing the deformation rate of the separator (deformation adaptability). However, in conventional technologies, it is difficult to simultaneously achieve these characteristics.

With the separators described in Patent Documents 1 to 6 described above, a balance among ionic permeability, compression resistance, withstand voltage characteristics, and deformation adaptability to an electrode volume change cannot be obtained. An object of the present invention is to provide a polyolefin microporous membrane excellent in balance among ionic permeability, compression resistance, withstand voltage characteristics, and deformation adaptability to an electrode volume change.

SOLUTIONS TO THE PROBLEMS

As a result of intensive studies in view of the circumstances described above, the present inventors have found that when the melting endothermic amount ratio and the pore structure of a polyolefin multilayer microporous membrane are set within certain ranges, high toughness can be imparted, high adaptability to a volume change due to expansion and contraction of a negative electrode is exhibited, the membrane thickness change rate during hot pressing is small, and a function of maintaining withstand voltage characteristics and permeability at a high level is exhibited.

Specifically, the present invention is as follows.

[1] A polyolefin multilayer microporous membrane obtained by laminating a first microporous layer containing polypropylene and polyethylene and a second microporous layer containing polyethylene, wherein: in a temperature-melting endothermic amount curve obtained through measurement with a differential scanning calorimeter (DSC), ($\Delta H1 - \Delta H2$)/$\Delta H2 \times 100 \geq 20$, where $\Delta H1$ is a melting endothermic amount of polyethylene during first melting in a temperature range of 0 to 157°C, and $\Delta H2$ is a melting endothermic amount of polyethylene during second melting; when a content of the polyolefin in the first microporous layer is 100 mass% in AFM-IR measurement of a cross section of the polyolefin multilayer microporous membrane, a content ratio of the polypropylene in the first microporous layer is 10 mass% or more and 50 mass% or less; and the porosity is 35% or more and 70% or less.

[2] The polyolefin multilayer microporous membrane according to [1], wherein a toughness calculated by the following Formula 1 is 41000 (MPa·%) or more and 100000 (MPa·%) or less, and a sum of a tensile rupture strength in MD and a tensile rupture strength in TD is 280 MPa or more. tensile rupture elongation (%) + TD tensile rupture Toughness = MD tensile rupture strength (MPa) × MD tensile rupture elongation (%) + TD tensile rupture strength (MPa) × TD tensile rupture elongation (%)   Formula 1

[3] The polyolefin multilayer microporous membrane according to [1] or [2], wherein a mean flow pore diameter determined using a Perm Porometer is 10 nm or more and less than 30 nm, and a pore diameter distribution value obtained by subtracting the mean flow pore diameter from a maximum flow pore diameter is less than 20 nm.

[4] The polyolefin multilayer microporous membrane according to [1] or [2], wherein the polyolefin multilayer microporous membrane has a withstand voltage of 1.5 kV/12 um or more.

[5] The polyolefin multilayer microporous membrane according to [3], wherein the polyolefin multilayer microporous membrane has a withstand voltage of 1.5 kV/12 um or more.

[6] A laminated polyolefin multilayer microporous membrane comprising the polyolefin multilayer microporous membrane according to any one of [1] to [5] and one or more porous layers provided on at least one surface of the polyolefin multilayer microporous membrane.

[7] A battery separator comprising the polyolefin multilayer microporous membrane according to any one of [1] to [6].

EFFECTS OF THE INVENTION

Since the polyolefin multilayer microporous membrane of the present invention has a specific melting endothermic amount ratio, a specific polypropylene content ratio, and a specific pore diameter distribution, it is possible to provide a polyolefin microporous membrane excellent in a balance among ionic permeability, compression resistance, withstand voltage characteristics, and deformation adaptability to an electrode volume change. Thus, when the polyolefin multilayer microporous membrane of the present invention is used as a battery separator, the cycle characteristics, process foreign substance resistance, rate characteristics, and self-discharge characteristics of the battery are improved in the case of increasing the capacity of the battery.

EMBODIMENTS OF THE INVENTION

Hereinafter, present embodiment of the present invention will be described. The present invention is not limited to the embodiments to be described below.

1. Polyolefin multilayer microporous membrane (hereinafter, also simply referred to as "microporous membrane")

[Melting endothermic amount ratio]

The polyolefin multilayer microporous membrane of the present invention satisfies the following formula where $\Delta H1$ is a melting endothermic amount during a first melting in a temperature range of 0 to 157°C and $\Delta H2$ is a melting endothermic amount during a second melting in a DSC curve (melting endothermic amount curve in ordinate and temperature in abscissa) obtained by measuring a melting endothermic amount with a differential scanning calorimeter (DSC).

Melting endothermic amount ratio of microporous membrane = $(\Delta H1 - \Delta H2)/\Delta H2 \times 100 \geq 20$

When the melting endothermic amount ratio of the microporous membrane is within the above range, the first melting endothermic amount of the polyethylene resin, which is the main component of the microporous membrane, is larger than the second melting endotherm, and the microporous membrane is thermally and dynamically stable, and therefore it can be said that softening and mechanical deformation hardly occur even when heated. That is, by melting a microporous membrane, then cooling the melt, and melting the solidified resin again, it is possible to measure an endotherm derived from the raw material of the microporous membrane (second melting), and a sum (first melting) of an endotherm derived from the raw material of the microporous membrane and an endotherm necessary for relaxing the stress remaining in the microporous membrane, the stress being based on the processing, such as stretching, performed in the course of forming the microporous membrane. Therefore, this leads to that the microporous membrane is hardly deformed even when the microporous membrane is compressed by an external force such as hot pressing. In addition, this indicates that crystallization of polyethylene in the microporous membrane has greatly advanced. Therefore, the microporous membrane can stretch well with high strength, and adaptability to a negative electrode volume change is improved. Alternatively, even if accelerated electrons collide with the resin when a voltage is applied to the battery, the structure of the microporous membrane is less prone to be broken, so that the microporous membrane has improved withstand voltage characteristics.

In one approach for adjusting the melting endothermic amount ratio of the microporous membrane within the above range, for example, production conditions such as the content ratio of the ultrahigh molecular weight polypropylene to be used together with the ultrahigh molecular weight polyethylene described later, the stretching temperature, and the stretching magnification are set. Owing to that the ultrahigh molecular weight polyethylene maintains a high crystalline state, the polyethylene contributes to fibril strength. Therefore, even when compression is applied to a battery or even when compressive stress is applied to the microporous membrane due to expansion of an electrode, the thickness is less likely to decrease, so that a porosity high enough for obtaining good cycle characteristics can be secured. When the melting endothermic amount ratio of the microporous membrane is less than 20, the structure of the microporous membrane is thermally unstable and is prone to be broken, so that the microporous membrane has reduced compression resistance and withstand voltage characteristics. On the other hand, the microporous membrane more preferably has a melting endothermic amount ratio of 50 or less. When the melting endothermic amount ratio is within the above preferable, the microporous membrane is thermally stable and also has good shutdown function. Specifically, the melting endothermic amount ratio of a microporous membrane can be determined by the measurement method described in EXAMPLES.

[Content ratio of polypropylene]

The polyolefin multilayer microporous membrane of the present invention is obtained by laminating a first microporous layer containing polypropylene and polyethylene and a second microporous layer containing polyethylene. With the polyolefin multilayer microporous membrane of the present invention, when the content ratio of the polypropylene in the first microporous layer in a cross section of the microporous membrane is measured by AFM-IR measurement described later, the content of the polypropylene is 10 mass% or more, preferably 15 mass% or more, and more preferably 20 mass% or more where the amount of the polyolefin in the first microporous layer is 100 mass%. When the content ratio of the polypropylene is less than 10 mass%, the heat resistance of the microporous membrane may be deteriorated. The content ratio of the polypropylene is less than 50 mass%, preferably less than 45 mass%, and more preferably less than 40 mass%. As the content ratio of the polypropylene increases, the content ratio of the polyethylene where the amount of the polyolefin of the first microporous layer is taken as 100 mass% may decrease, leading to a decrease in strength. Therefore, the content of the polypropylene is preferably less than 50 mass%.

When the content ratio of the polypropylene in the microporous membrane is within the above range, the meltdown temperature can be made higher as compared with the case of using only polyethylene, and the microporous membrane can be used for applications requiring heat resistance. Because the polypropylene spreads in the form like islands such that gaps in the network structure of the polyethylene are filled therewith, the pore structure of a resulting microporous membrane becomes denser and the withstand voltage characteristics are improved. The content ratio (mass%) of the polypropylene can be determined by the method described in EXAMPLES.

[Porosity]

The polyolefin multilayer microporous membrane of the present invention has a porosity of 35% or more, preferably 40% or more, and more preferably 45% or more. The porosity is 70% or less, preferably 60% or less, and more preferably 50% or less. When the porosity is within the above range, the retention amount of an electrolytic solution can be increased, high ionic permeability can be secured, and the rate characteristics are improved. The porosity can be adjusted to the above range by regulating the blending ratio of the components of the polyolefin resin, stretching magnification, heat fixing conditions, and the like during the production process.

[Value of pore diameter distribution (maximum flow pore diameter - mean flow pore diameter)].

The maximum flow pore diameter and the mean flow pore diameter of the present invention described below are values obtained by a method described later using a Perm Porometer (product name, model: CFP-1500A) of Porous Materials Inc.

In the polyolefin multilayer microporous membrane of the present invention, the value of pore diameter distribution is less than 20 nm, preferably 18 nm or less, and more preferably 15 nm or less. Here, the value of the pore diameter distribution refers to a value obtained by subtracting the mean flow pore diameter from the maximum flow pore diameter. When the value of the pore diameter distribution is within the above range, the structure of the microporous membrane is uniform, so that a microporous membrane excellent in withstand voltage characteristics can be obtained. For example, since electrons are accelerated in a region filled with an electrolytic solution, that is, a region between an electrode and a separator surface and a region of through-holes of the separator, when a microporous membrane having excellent uniformity of pore diameter distribution as described above is used as the separator, excellent withstand voltage characteristics are attained and variation in the withstand voltage characteristics in the plane of the separator is suppressed. In addition, cycle performance is improved when charge and discharge are repeated in a battery incorporating the microporous membrane. In one approach for adjusting the value of the pore diameter distribution of the microporous membrane within the above range, the crystallization rate of a mixture of the ultrahigh molecular weight polyethylene and the ultrahigh molecular weight polypropylene described later is controlled to refine crystals of the polyolefin resin, and production conditions such as a stretching temperature and a stretching magnification are set such that the structure is made uniform.

[Mean flow pore diameter]

The polyolefin multilayer microporous membrane of the present invention preferably has a mean flow pore diameter of less than 30 nm, more preferably 28 nm or less, and still more preferably 25 nm or less. The mean flow pore diameter is preferably 10 nm or more, more preferably 15 nm or more, and still more preferably 20 nm or more. When the mean flow pore diameter is within the above preferable range, the structure of the microporous membrane is dense, so that the microporous membrane is excellent in withstand voltage characteristics, and deterioration of air permeation resistance after applying a coating layer is inhibited. That is, when the mean flow pore diameter is smaller than 30 nm, the structure inside the microporous membrane is complicated, and electrons are less likely to be accelerated, so that good withstand voltage characteristics can be obtained. In addition, the smaller the mean flow pore diameter, the larger the surface area of the microporous membrane. When coating is applied to a surface of the microporous membrane for the purpose of improving adhesion with an electrode or the like, an adhesive or the like of the coating layer easily enters pores to their deep parts, and does not accumulate at the interface between the microporous membrane and the coating layer, so that the openings in the surface of the microporous membrane are less prone to be clogged, and as a result, deterioration of the air permeation resistance after the coating is inhibited. In one approach for obtaining a microporous membrane that exhibits such characteristics, the crystallization rate of a mixture of the ultrahigh density polyethylene and the ultrahigh density polypropylene described later is controlled to refine crystals of the polyolefin resin, and production conditions such as a stretching temperature and a stretching magnification are set such that the structure is complicated.

[Toughness]

The toughness of the polyolefin multilayer microporous membrane of the present invention is determined by the following formula.

Toughness = MD tensile rupture strength (MPa) × MD tensile rupture elongation (%) + TD tensile rupture strength (MPa) × TD tensile rupture elongation (%)    Formula 1

The toughness of the polyolefin multilayer microporous membrane of the present invention is preferably 41000 (MPa•%) or more, more preferably 45000 (MPa•%) or more, and still more preferably 49000 (MPa•%) or more. The toughness is preferably 100000 (MPa•%) or less, more preferably 90000 (MPa•%) or less, and still more preferably 80000 (MPa•%) or less. When the toughness is within the above preferable, the polyolefin microporous membrane follows deformation of an electrode when an impact such as dropping or compression is applied to a battery, so that a short circuit of the battery can be inhibited. This microporous membrane can stretch well with high strength, has high adaptability to a negative electrode volume change, and can maintain the withstand voltage characteristics and permeability at a high level even when compressed during electrode expansion. When the microporous membrane is used as a separator, the separator can follow unevenness of the electrode, deformation of the battery, generation of internal stress due to heat generation of the battery, and the like.

In one approach for obtaining a microporous membrane having toughness within the above preferable range, the ultrahigh molecular weight polyethylene described later is used as a raw material, and production conditions are set so that the resin is crystallized as highly (with high strength and high elongation) as possible, the production conditions including, for example, a content ratio of 50 mass% or more of the ultrahigh molecular weight polyethylene where the amount of the polyolefin is 100 mass%, a content ratio of an ultrahigh molecular weight polypropylene to be used together with the ultrahigh molecular weight polyethylene where the amount of the polyolefin is 100 mass%, a stretching temperature, and a stretching magnification (the first stretching magnification of 40 or less, and the second stretching magnification of 4 or less).

[Tensile rupture strength]

The tensile rupture strength in MD of the polyolefin multilayer microporous membrane of the present invention is preferably 130 MPa or more, more preferably 140 MPa or more, and still more preferably 150 MPa or more. The tensile rupture strength in MD of the microporous membrane is preferably 400 MPa or less, and more preferably 300 MPa or less. The tensile rupture strength in TD of the microporous membrane is preferably 130 MPa or more, and more preferably 150 MPa or more. The tensile rupture strength in TD of the microporous membrane is preferably 300 MPa or less.

The sum of the tensile rupture strength in MD and the tensile rupture strength in TD of the microporous membrane is preferably 280 MPa or more, more preferably 290 MPa or more, and still more preferably 300 MPa or more. The sum of the tensile rupture strength in MD and the tensile rupture strength in TD of the microporous membrane is preferably 800 MPa or less, and more preferably 700 MPa or less.

When the tensile rupture strength of a microporous membrane is within the above preferable range, the microporous membrane is hardly ruptured even when high tension is applied to the microporous membrane, and the microporous membrane can be used for applications requiring high durability. For example, when a microporous membrane having excellent strength as described above is used as a separator, a short circuit at the time of preparing a battery or at the time of using the battery can be inhibited, and the separator can be wound while high tension is applied, so that the winding density of a three-layer membrane composed of a negative electrode, a separator, and n positive electrode can be increased, and thus the capacity of the battery can be increased. When a porous layer is formed on at least one surface of a microporous membrane, the microporous membrane is required to have higher tensile rupture strength. Therefore, from the viewpoint of improving the coatability of the coating dispersion liquid for a porous layer, when the tensile rupture strength is within the above range, the microporous membrane can be suitably used as a base material for coating.

In one approach for obtaining a microporous membrane having a tensile rupture strength within the above preferable range, an ultrahigh molecular weight polyolefin composition and an ultrahigh molecular weight polypropylene described later are used as raw materials and production conditions such as a stretching temperature and a stretching magnification are set.

[Tensile rupture elongation]

The tensile rupture elongation in MD of the polyolefin multilayer microporous membrane of the present invention is preferably 100% or more, more preferably 120% or more, and still more preferably 150% or more. The tensile rupture elongation in MD of the microporous membrane is preferably 250% or less, and more preferably 200% or less. The tensile rupture elongation in TD of the microporous membrane is preferably 100% or more, more preferably 120% or more, and still more preferably 150% or more. The tensile rupture elongation in TD of the microporous membrane is preferably 250% or less, and more preferably 200% or less. When the tensile rupture elongation of the microporous membrane is within the above preferable range, if the microporous membrane is sufficiently stretched on the application of an impact to a battery, and even if the electrode membrane is deformed due to the impact, the microporous membrane can follow the deformation, so that the electrode is not exposed at both ends in the width direction of the battery, and a short circuit is prevented. In one approach for obtaining a microporous membrane having a tensile rupture elongation within the above preferable range, an ultrahigh molecular weight polyolefin composition described later is used as a raw material and production conditions such as a stretching temperature and a stretching magnification (the first stretching magnification of 40 or less, and the second stretching magnification of 4 or less) are set.

[Membrane rupture temperature (Falling ball test)]

The membrane rupture temperature is preferably 160°C or more, more preferably 170°C or more, and still more preferably 180°C or more. On the other hand, the membrane rupture temperature is preferably 200°C or less, and more preferably 190°C or less. When the rupture temperature of the microporous membrane is within the above preferable range, the microporous membrane is hardly ruptured even when an impact such as dropping or compression is applied to the microporous membrane at a high temperature, and therefore the microporous membrane can be used for applications requiring heat resistance and high durability.

When a microporous membrane having a membrane rupture temperature within the above preferable range is used as a separator, even if a short circuit occurs in the battery and the temperature rises to a high temperature when an impact is applied from the outside during use of the battery, the separator is less prone to be broken, so that the temperature of the battery does not rise at once, and therefore a battery explosion and the like can be inhibited, so that the safety of the battery can be improved. In order to obtain a microporous membrane having a membrane rupture temperature within the above preferable range, it is preferable that not only the ultrahigh molecular weight polypropylene described later is used as a raw material, but also the content ratio of the ultrahigh molecular weight polypropylene in the layer containing the ultrahigh molecular weight polypropylene where the amount of the polyolefin is 100 mass% is 15 mass% or more and the thickness of the layer containing the polypropylene is 1 um or more. In addition, as can be seen from Examples and Comparative Examples described later, the layer containing polypropylene is preferably provided as an intermediate layer among an intermediate layer and skin layers.

[Withstand voltage]

The microporous membrane preferably has a withstand voltage of 1.5 kV/12 um or more, more preferably 1.6 kV/12 um or more, and still more preferably 1.7 kV/12 um or more in terms of a microporous membrane having a thickness of 12 um. By adjusting the withstand voltage within such a range, self-discharge can be effectively prevented when used for a battery, and the long-term preservability of the battery can be improved. In addition, during a battery fabrication process, when a foreign matter the film is attached and taken as it is into the battery, the probability of occurrence of short circuit is suppressed even in a state where a voltage is applied to the front surface and the back surface of the membrane inside the battery, so that process suitability can also be improved. Impartation of such withstand voltage performance to the microporous membrane can be attained by setting the pore diameter within the above-described range, setting the relationship of the melting endothermic amount ($\Delta H1$, $\Delta H2$) as described above, and further adjusting the value of the pore diameter distribution.

2. Layer configuration and resin composition of polyolefin multilayer microporous membrane

(A) [Layer configuration]

The polyolefin multilayer microporous membrane of the present invention is obtained by laminating a first microporous layer and a second microporous layer, and is preferably, as one example, in the form of a laminated membrane described below in which layer A is provided as an intermediate layer (core layer) and layers B are disposed as skin layers on both sides of the intermediate layer. Layer A is composed of a first microporous layer described below, and layer B is composed of a second microporous layer. As will be described in EXAMPLES described later, the intermediate layer may be layer B, and the skin layers may be layer A. Further, layer A and layer B may be further laminated.

(B) [Polyolefin resin]

The first and second polyolefin resins described later constituting the polyolefin multilayer microporous membrane each contain polyolefin as a main component. The "main component" means that the polyolefin is contained in an amount of 50 mass% or more, preferably 80 mass% or more, and more preferably 90 mass% or more based on the overall amount of the polyolefin resin in each layer. The first and second polyolefin resins each may contain other resin components other than polyolefin, as necessary. Exemplary such other resin components include heat resistant resins. Further, the first and second polyolefin resins may contain various additives such as an antioxidant, a heat stabilizer, an antistatic agent, an ultraviolet absorber, an antiblocking agent, a filler, a crystal nucleating agent, and a crystallization retarder as long as the effects of the present invention are not impaired. In the following, the polyolefin multilayer microporous membrane according to this embodiment is described.

(1) [First polyolefin resin]

In the polyolefin multilayer microporous membrane of the present invention, the first microporous layer is formed of a first polyolefin resin. The first polyolefin resin contains polyethylene and polypropylene. Each component will be described in detail below.

As the polyethylene, ultrahigh molecular weight polyethylene (UHMwPE), high density polyethylene (HDPE), medium density polyethylene, branched polyethylene, linear low density polyethylene, and the like are used. The polyethylene may be either an ethylene homopolymer or a copolymer of ethylene with another $\alpha$-olefin. Examples of the $\alpha$-olefin include propylene, butene-1, hexene-1, pentene-1, 4-methylpentene-1, octene, vinyl acetate, methyl methacrylate, and styrene.

The first polyolefin resin preferably contains ultrahigh molecular weight polyethylene (UHMwPE). The ultrahigh molecular weight polyethylene to be used as a raw material has a weight average molecular weight (Mw) of $1 \times 10^6$ or more, and preferably $1 \times 10^6$ or more and $8 \times 10^6$ or less. When the Mw is within the above range, good formability is attained. The polyethylene may be used alone or two or more thereof may be used in combination. Two or more types of polyethylene differing in Mw may be used in admixture.

The ultrahigh molecular weight polyethylene may be contained in an amount of 40 mass% or more and 90 mass% or less based on 100 mass% of the entire first polyolefin resin. When the content of the ultrahigh molecular weight polyethylene is 40 mass% or more and 90 mass% or less, the Mw of a resulting microporous membrane tends to be easily controlled within a specific range, and productivity such as extrusion kneadability tends to be excellent. In addition, when ultrahigh molecular weight polyethylene is contained, high mechanical strength and high toughness can be obtained even when the microporous membrane is thinned.

The Mw of the polypropylene is preferably more than $5.0 \times 10^5$ and less than $4.0 \times 10^6$, and more preferably more than $1.0 \times 10^6$ and less than $3.5 \times 10^6$. The molecular weight distribution (Mw/Mn) of the polypropylene is preferably 1.01 to 100, and more preferably 1.1 to 50. The polypropylene may be either a single substance or a composition containing two or more types of polypropylene.

The content of the polypropylene is preferably 10 mass% or more and 60 mass% or less based on 100 mass% of the mass of the entire first polyolefin resin. The content of the polypropylene is preferably 60 mass% or less, and more preferably 50 mass% or less. The content of the polypropylene is preferably 10 mass% or more, and more preferably 20 mass% or more. When the content of the polypropylene is within the above range, structural uniformity, meltdown characteristics, falling ball temperature, reduction in pore diameter, and strength are improved.

The melting point of the polypropylene is preferably 150 to 175°C, and more preferably 155 to 165°C. The polypropylene not only may be a homopolymer but also may be at least one of a block copolymer and a random copolymer containing another $\alpha$-olefin or diolefin.

As such other olefin, ethylene or an $\alpha$-olefin having 4 to 8 carbon atoms is preferable. Examples of the $\alpha$-olefin having 4 to 8 carbon atoms include 1-butene, 1-hexene, and 4-methyl-1-pentene. The diolefin preferably has 4 to 14 carbon atoms. Examples of the diolefin having 4 to 14 carbon atoms include butadiene, 1,5-hexadiene, 1,7-octadiene, and 1,9-decadiene. The content of the other olefin or diolefin is preferably less than 10 mass% where the amount of the propylene copolymer is 100 mass%.

(2) [Second polyolefin resin]

The features of the second polyolefin resin constituting the second microporous layer are as follows.

The second polyolefin resin contains polyethylene. The polyethylene is preferably a composition composed of high density polyethylene (HDPE) having an Mw of less than $1.0 \times 10^6$ and ultrahigh molecular weight polyethylene (UHMwPE) having an Mw of $1.0 \times 10^6$ or more. As the polyethylene, the polyethylene described for the first polyolefin resin can be used. The second polyolefin resin is preferably free of polypropylene.

When the second polyolefin resin contains high density polyethylene, the shutdown temperature of the polyolefin multilayer microporous membrane of the present invention can be lowered. This is considered to be because in the layer containing the high density polyethylene, the mobility of the polyethylene component is increased, and pores are clogged at a lower temperature.

The weight average molecular weight of the high density polyethylene is less than $1.0 \times 10^6$, preferably $8.0 \times 10^5$ or less, and more preferably $6.0 \times 10^5$ or less. The Mw of the high density polyethylene is $6.0 \times 10^4$ or more, and preferably $8.0 \times 10^4$ or more. The MWD of the high density polyethylene is preferably 2 to 50, and more preferably 4 to 15.

The content of the high density polyethylene is preferably 50.0 mass% or less based on 100 mass% of the mass of the entire second polyolefin resin. The content of the high density polyethylene is particularly preferably 40.0 mass% or less. When the content is within the above range, a polyolefin multilayer microporous membrane having good permeability and excellent physical property balance can be obtained while maintaining a shutdown temperature of 140°C or less.

The content of the ultrahigh molecular weight polyethylene is preferably 100 mass% or less based on 100 mass% of the mass of the entire second polyolefin resin. The content of the ultrahigh molecular weight polyethylene is particularly preferably 80.0 mass% or less. This is because when the content is within the above range, an increase in pressure is inhibited even during molding, and productivity is improved. In addition, the content is not particularly limited, but is more preferably 50 mass% or more, and particularly preferably 60 mass% or more from the viewpoint of maintaining mechanical strength and maintaining high toughness.

3. Method for producing polyolefin multilayer microporous membrane

Next, a method for producing the polyolefin multilayer microporous membrane of the present invention is described. The method for producing the polyolefin multilayer microporous membrane of the present invention is not limited to the following.

One example of the method for producing the polyolefin multilayer microporous membrane of the present invention is as follows.

(a) Preparation of polyolefin solution
(b) Formation of gel-like multilayer sheet
(c) First stretching
(d) Removal of plasticizer
(e) Drying
(f) Second stretching
(g) Heat treatment
(h) Formation of porous layer

(a) Adjustment of solutions for layer A and layer B

A plasticizer is added to a polyolefin resin composition in a twin-screw extruder, and the resulting mixture is melt-kneaded to adjust solutions for layer A and layer B, respectively. Layer A is a first polyolefin resin composition, and layer B is a second polyolefin resin composition.

As for the blending ratio of each layer polyolefin resin composition and the plasticizer, the content of the polyolefin resin composition is preferably 20 mass% or more and 30 mass% or less based on 100 mass% of the total of the polyolefin resin composition and the plasticizer. Owing to setting the concentration of the polyolefin resin composition within the above range, it is possible to prevent swelling and necking-in at a die outlet when extruding the polyolefin solution, and also possible to improve formability and self-supporting property of the extrudate.

Each of the solutions for layer A and layer B is fed from an extruder to a single die, and there both the solutions are extruded into a layered sheet shape such that, for example, the layer A forms a core layer and the layer B forms skin layers sandwiching both sides of the core layer. Thus, an extrudate is obtained. The extrusion method may be either a flat die method or a blown film extrusion method. In either method, it is possible to use a method in which the solutions are fed to separate manifolds and laminated in layers at the lip inlet of the multilayer die (multi-manifold method), or a method in which the solutions are made in advance into layer-like flows and then fed to a die (block method). A conventional multi-manifold method and a conventional block method can be applied. The gap of a multilayer flat die may be set to 0.1 mm or more and 5 mm or less. The extrusion temperature is preferably 140°C or more and 250°C or less, and the extrusion rate is preferably 0.2 to 15 m/min. By adjusting the extrusion amount of the solution for each layer, the thickness ratio of the layers can be adjusted.

(b) Formation of gel-like multilayer sheet

The resulting extrudate is cooled to form a gel-like multilayer sheet. By this cooling, the microphases of the polyolefin separated by the membrane-forming solvent can be immobilized. When the cooling rate is within the range as described below, the degree of crystallization will be retained within an adequate range, and a gel-like sheet suitable for stretching is formed. Exemplary methods used for the cooling include methods wherein the sheet is brought in contact with a cold medium such as cold air or cooling water and methods wherein the sheet is brought in contact with a cooling roll, and the preferred is the cooling by contacting with a roll cooled by using a cooling medium. The cooling is preferably performed at a rate of 50°C/min or more at least to the gelation temperature. The cooling is preferably performed to 25°C or less.

(c) First stretching

Then, the gel-like sheet is stretched. The method of stretching the gel-like sheet is also referred to "wet stretching". The gel-like sheet can be uniformly stretched since it contains the solvent. After being heated, the gel-like sheet is preferably stretched at a prescribed magnification by a tenter method, a roll method, a blown film extrusion method, or a combination thereof. The stretching conducted may be either a monoaxial stretching or a biaxial stretching, and the preferred is the biaxial stretching. In the case of biaxial stretching, any of simultaneous biaxial stretching, stepwise stretching, and multistage stretching (for example, a combination of simultaneous biaxial stretching and stepwise stretching) may be used.

The stretching magnification (planar stretching magnification) is, for example, preferably 2 or more, and more preferably 3 or more and 30 or less in the case of uniaxial stretching. In the case of biaxial stretching, the magnification is preferably 9 or more, more preferably 16 or more, and particularly preferably 25 or more and 40 or less. In both the longitudinal direction (machine direction: MD) and the lateral direction (transverse direction: TD), the stretching magnification is preferably 3 or more, and the stretching magnifications in MD and TD may be either the same or different from each other. The stretching magnification in this step refers to the areal stretching magnification of a microporous membrane immediately before being subjected to the next step based on the microporous membrane immediately before this step. When the stretching magnification is within the above range, the resulting microporous membrane can improve high toughness through maintaining high elongation while achieving high strength.

The stretching temperature is preferably 90°C or more, and more preferably 110°C or more. The stretching temperature is preferably 120°C or less. When the stretching temperature is within the above range, rupture due to stretching of the polyolefin resin, which is a low melting point component, is inhibited, and stretching at high magnification can be performed.

(d) Removal of plasticizer

The removal of the plasticizer is conducted using a washing solvent. The washing solvent and the method for removing the plasticizer using the cleaning solvent are known, and therefore the description thereof is omitted. For example, the methods disclosed in JP 2132327 B2 and JP 2002-256099 A.

(e) Drying

The polyolefin multilayer microporous membrane from which the plasticizer has been removed is dried by a heat drying method or an air drying method. Any method capable of removing the washing solvent including conventional methods such as heat drying and air drying (moving air) may be used. The treatment conditions for removing volatile species such as a washing solvent may be the same as those disclosed in, for example, WO 2008/016174 A and WO 2007/132942 A.

(f) Second stretching

Subsequently, the dried polyolefin multilayer microporous membrane is stretched. The stretching of the dried microporous membrane is also referred to as second stretching. Specifically, the dried microporous membrane film is stretched at least in uniaxial direction. The second stretching of the polyolefin multilayer microporous membrane can be performed by a tenter method or the like in the same manner as described above while heating. Since layer A in the polyolefin multilayer microporous membrane of the present invention simultaneously contains two polyolefin resins, namely, polyethylene and polypropylene, the second stretching is preferably uniaxial stretching from the viewpoint of the uniformity of a lamellar structure.

The stretching magnification is preferably 1.5 or more in TD, and more preferably 2.0 or more. When the TD stretching of the second stretching is performed at 1.5 magnifications or more, the crystal molecular chains are highly oriented in TD. However, if the stretching magnification is excessively high, the shutdown temperature and the heat shrinkage increase. Therefore, in consideration of the balance therewith, the stretching magnification in TD is preferably 3.5 or less.

Here, the stretching magnification in the second stretching refers to the ratio of the length in TD of the polyolefin multilayer microporous membrane after the second stretching to the length in TD of the polyolefin multilayer microporous membrane before the second stretching.

(g) Heat treatment

Preferably, the polyolefin multilayer microporous membrane after the second stretching is subjected to heat treatment. Specifically, the polyolefin multilayer microporous membrane is subjected to heat treatment with both TD edges of the membrane grasped with clips and with the width fixed (TD thermal fixation treatment step). The temperature of the heat treatment is preferably set to 115°C or more and 135°C or less.

Through appropriately adjusting the polyolefin resin compositions, the first stretching step, the second stretching step, and the heat treatment step in the preferred ranges described above, a uniform fibril network of the polyolefin resin is formed three-dimensionally and densely, and thus a polyolefin multilayer microporous membrane having a microporous structure tends to be produced. As a result, a polyolefin multilayer microporous membrane having a small standard deviation in a plane direction of the membrane thickness change rate after heat compression, a good membrane thickness change rate after heat compression, and low-temperature shutdown characteristics is obtained.

(h) Formation of porous layer

The laminated polyolefin multilayer microporous membrane of the present invention preferably further includes one or more porous layers on at least one surface of the polyolefin multilayer microporous membrane of the present invention. That is, the polyolefin multilayer microporous membrane of the present invention may be processed into a laminated polyolefin porous membrane by laminating a porous layer other than the first microporous layer and the second microporous layer on at least one surface of the polyolefin multilayer microporous membrane.

The porous layer is not particularly limited. For example, a coating layer comprising a binder component and inorganic particles may be laminated and then made porous. As described later, when the solvent of the binder component is dried, followed by extraction, the binder resin shrinks and becomes porous. The binder component is not particularly limited, and known resins can be used, and examples thereof include acrylic resin, polyvinylidene fluoride resin, polyamideimide resin, polyamide resin, aromatic polyamide resin, polyimide resin, and polyvinyl alcohol. These resins can be used with dissolution or dilution with a solvent such as an organic solvent or water. The inorganic particles are not particularly limited, and known materials can be used, and for example, alumina, boehmite, barium sulfate, magnesium oxide, magnesium hydroxide, magnesium carbonate, and silicon can be used.

The method for forming the porous layer is not particularly limited, and for example, the porous layer can be obtained via the following steps.

(i) Step of preparing a coating dispersion liquid for a porous layer using a binder resin, inorganic particles, and a solvent.
(ii) Step of coating at least one surface or both surfaces of the polyolefin multilayer microporous membrane with the coating dispersion liquid for a porous layer.
(iii) Step of drying the solvent to form a porous layer.

The step (iii) may be replaced by (iv) a step of forming a porous layer with an organic solvent in which the aforementioned solvent is soluble but the binder resin is insoluble, and then removing the organic solvent.

The battery separator of the present invention preferably includes the polyolefin multilayer microporous membrane of the present invention. The polyolefin multilayer microporous membrane of the present invention is suitable for a separator for a secondary battery such as a lithium ion secondary battery, a lithium polymer secondary battery, a nickel-hydrogen secondary battery, a nickelcadmium secondary battery, a nickel-zinc secondary battery, or a silver-zinc secondary battery, and is suitable especially for a lithium ion secondary battery separator. For a lithium secondary battery including a separator made of the polyolefin multilayer microporous membrane of the present invention, known electrodes and a known electrolytic solution may be used. In addition, the structure of the lithium secondary battery including the separator made of the polyolefin multilayer microporous membrane of the present invention may also be a known structure.

EXAMPLES

Hereinafter, the present invention will be described in more detail by way of examples. Unless otherwise specified, the following measurements are performed at room temperature and in a humidity environment where dew condensation does not occur. The present invention is not limited to these examples.

[Measurement methods]

(1) [Membrane thickness (pm)]

The membrane thicknesses of a polyolefin multilayer microporous membrane at five points separated by 10 cm within an area of 95 mm × 95 mm were measured with a contact thickness meter (LITEMATIC manufactured by Mitutoyo Corporation, contact pressure: 0.01 N, equipped with a probe of 10.5 mm in diameter), and the average value of the measured values was defined as the membrane thickness ($\mu$m).

(2) [Porosity (%)]

A polyolefin multilayer microporous membrane was cut into a size of 95 mm × 95 mm, and the volume ($cm^3$) and mass (g) of the cut piece were measured. Based on these measurements and a membrane density ($g/cm^3$), the porosity was calculated using the following formula.

Porosity = ((volume - mass/membrane density) / volume) × 100

Here, the membrane density was 0.99. In addition, the membrane thickness measured in the above section (1) was used for the calculation of the volume.

(3) [Air permeation resistance (sec/100 cm$^3$)]

The air permeation resistance (sec/100 cm$^3$) of a polyolefin multilayer microporous membrane was measured using an air permeation resistance tester (EGO-1T, manufactured by Asahi Seiko Co., Ltd.) in accordance with JIS P-8117: 2009.

(4) [Puncture strength (mN)]

Using a digital force gauge (Model DS2-20N) manufactured by IMADA Co., Ltd., a polyolefin microporous membrane having a membrane thickness of T1 (pm) grasped was pierced with a pin with a diameter of 1 mm (a radius of curvature R of 0.5 mm at the tip) (P-3000S-102G-10 manufactured by Kato Tech Co., Ltd.) at a speed of 2 mm/sec, and at this time, the maximum load value (P1) was measured and the measurement was taken as the puncture strength. The puncture strength (P2) in terms of 12 $\mu$m, which was obtained via conversion with a membrane thickness of 12 $\mu$m, was calculated by the following formula.

$$\text{Formula: P2} = (P1 \times 12)/T1.$$

(5) [Compression resistance/membrane thickness change rate (%) after heat compression]

Five samples having a size of 40 mm × 40 mm (MD × TD) are cut out from a polyolefin multilayer microporous membrane. The five samples cut are stacked one on another with their four sides are aligned to afford a measurement sample. The measurement sample was allowed to stand between horizontal plates, and heat-compressed at 70°C under a pressure of 7.8 MPa for 10 seconds by a compressing device (CYPT-20 Special; manufactured by Sintokogio, Ltd.). For the polyolefin multilayer microporous membrane after 3 hours from release of the heat compression, the thicknesses at five points in total, i.e., four points near the corners and one point at the center, were measured per sheet, then the average was calculated, and the membrane thickness change rate after heat compression was calculated by the following formula.

Membrane thickness change rate after heat compression = [(average thickness before heat compression - average thickness after release of heat compression) / (average thickness before heat compression)] × 100          Formula:

Here, the membrane thickness measured in the above section (1) was used for the calculation of the average thickness before compression.

(6) [Shutdown temperature (°C) and meltdown temperature (°C)]

The polyolefin multilayer microporous membrane is exposed to an atmosphere at 30°C, and the air permeation resistance is measured while the temperature is raised at a rate of 5°C/min. The temperature at which the air permeation resistance of the polyolefin multilayer microporous membrane reached 100,000 seconds/100 cm$^3$ was defined as a shutdown temperature. The meltdown temperature was defined to be a temperature at which the temperature was further raised after reaching the shutdown temperature and the air permeation resistance became less than 100,000 seconds/100 cm$^3$. The air permeability was measured using an air permeation resistance tester (EGO-1T, manufactured by Asahi Seiko Co., Ltd.) in accordance with JIS P 8117: 2009.

(7) [Tensile rupture strength (MPa), tensile rupture elongation (%), toughness (MPa·%)]

The tensile rupture strength (MPa) and the tensile rupture elongation (%) corresponding to MD and TD were measured in accordance with ASTM D 882 under the following conditions using an tensile tester Instron 5543 manufactured by Instron Corporation.

- Sample shape: Rectangle of 100 mm in length × 10 mm in width
- Measurement direction: MD (length direction), TD (width direction)
- Distance between chucks: 20 mm
- Tensile rate: 100 mm/min
- Grip: 2702-018 Jaw Faces for Flats (Rubber Coated, 50 × 38 mm) manufactured by Instron Corporation

- Load cell: 500 N
- Chuck pressure: 0.50 MPa
- Temperature: 23°C

The tensile rupture strength (MPa) was determined by dividing the strength at sample rupture by the cross-sectional area of the sample before the test. The tensile rupture elongation (%) was determined by dividing the amount of elongation (mm) until the sample ruptured by the distance between chucks (20 mm) and then multiplying the quotient by 100. For the tensile rupture strength and the tensile rupture elongation, the average value of values obtained by measuring five samples in each direction was calculated.

The toughness (MPa·%) was calculated using the following formula.

Toughness (MPa·%) = MD tensile rupture strength (MPa) × MD tensile rupture elongation (%) + TD tensile rupture strength (MPa) × TD tensile rupture elogation (%).

(8) [Pore diameter (nm)]

Mean flow pore diameter (nm) and maximum flow pore diameter (nm)

The mean flow pore diameter and the maximum flow pore diameter (nm) of microporous membranes were measured as follows. The measurements were performed in the order of Dry-up and Wet-up using a Perm Porometer (product name, model: CFP-1500A) manufactured by Porous Materials Inc. In the measurement of the Dry-up, pressure is applied to a polyolefin microporous membrane, and the flow rate of air passing therethrough is measured. In the measurement of the Wet-up, pressure was applied to the polyolefin microporous membrane fully immersed with Galwick (product name) having a known surface tension, and the pore diameter was calculated by conversion from the pressure at which the air started to permeate, and this pore diameter was used for the maximum flow pore diameter. The mean flow pore diameter was converted from the pressure at the intersection of a curve indicating the slope of 1/2 of that of a pressure-flow rate curve measured in the Dry-up measurement and a curve measured in the Wet-up measurement. The conversion between the pressure and the pore diameter was conducted by the following equation:

$$d = C \cdot \gamma / P$$

wherein d (um) is the pore diameter of the microporous membrane, $\gamma$ (dynes/cm) is the surface tension of the liquid, P (Pa) is the pressure, and "C" is the pressure constant (2860).

(9) [Melting endothermic amount ΔH (J/g)]

The slope of the linear approximation formula indicating the tendency of the melting peak temperature rise with respect to the natural logarithm of the temperature raising rate observed by DSC of a polyolefin microporous membrane was determined using DSC 8500 manufactured by Perkin-Elmer as described later. Five points were randomly selected from the center position in the width direction of the polyolefin microporous membrane, and samples were cut and stacked so as to have a prescribed sample amount described later at each temperature rising rate, and packed in an aluminum standard container, and used as a measurement sample.

Sample amount: about 5 mg [5°C/min], about 2 mg [20°C/min], about 0.7 mg [100°C/min], about 0.4 mg [300°C/min]

In the first temperature raising, the measurement temperature range was set to 0°C to 200°C under a nitrogen atmosphere (20 mL/min), the temperature raising rate was set to 10°C/min, and the holding time when the temperature reached 200°C was set to 10 minutes. Thereafter, the temperature was lowered at a temperature lowering rate of 30°C/min under a nitrogen atmosphere (20 mL/min). Next, in the second temperature raising (reheating), the measurement temperature range was set to 0°C to 200°C under a nitrogen atmosphere (20 mL/min), the temperature raising rate was set to 10°C/min, and the holding time when the temperature reached 200°C was set to 5 minutes.

A straight line connecting 0°C and 157°C on the DSC curve obtained at each temperature raising rate was used as a baseline, the temperature at the melting endothermic peak was read, and the melting point of the microporous membrane was used as the peak temperature. (When two or more peaks are observed, the melting point peak temperature of the microporous membrane is read from the peak that absorbs the most heat.) The melting endothermic amount ΔH1 during the first melting and the melting endothermic amount ΔH2 during the second melting of polyethylene in the temperature range of 0 to 157°C can be determined.

(10) [Content ratio (mass%) of polypropylene] AFM-IR measurement

A polyolefin microporous membrane was cut out and cut with a microtome to expose an MD cross section, and thus a cross-sectional specimen was prepared as a sample. The sample was fixed to a ZnSe prism for AFM-IR, and the cross section of the first layer was irradiated with infrared laser light from the prism side under ATR conditions, and the thermal expansion of the sample associated with light absorption was detected as the displacement of the AFM cantilever.

The sample was irradiated with an infrared laser under the following conditions, and measurement was performed.

- Measuring apparatus: NanoIR Spectroscopy System (manufactured by Anasys Instruments Corporation)
- Light source: Tunable Pulsed Laser (1kHz)
- AFM mode: Contact mode
- Measurement wave number range: 1575 to 1200 cm$^{-1}$
- Wavenumber resolution: 2 cm$^{-1}$
- Coaverages: 32
- Number of integrations: Twice or more
- Polarizing angle: 45 degrees

In order to visualize the distribution of polypropylene in the cross section of the multilayer microporous membrane, measurement was performed under the following conditions using AFM-IR. The measurement range was set to 10 um in the longitudinal direction (MD direction) at the central portion in the film width direction, and the region including all the layers containing polypropylene in the thickness direction from the film surface layer portion was subjected to AFM-IR measurement. During the AFM-IR measurement, the displacement of the AFM cantilever was measured when the sample was irradiated with a laser of 1465 cm$^{-1}$ and when the sample was irradiated with a laser of 1376 cm$^{-1}$, and the polypyrropyrene content was determined from the intensity ratio, and mapping was performed. That is, the contents of polyethylene and polypropylene can be determined by measuring CH deformation of polyethylene by irradiation with 1465 cm$^{-1}$ and $CH_3$ deformation of polypropylene by irradiation with 1376 cm$^{-1}$ laser.

(11) [Withstand voltage (kV/12 um)]

The withstand voltage of a microporous membrane was evaluated by the following method. A microporous membrane cut into a circular shape having a diameter of 60 mm was placed on a square aluminum plate having a side of 150 mm, and a cylindrical electrode made of brass having a diameter of 50 mm, a height of 30 mm, and a weight of 500 g was placed on the polyolefin microporous membrane, and a TOS9201 insulation breakdown resistance tester manufactured by Kikusui Electronics Corporation was connected. A voltage was applied at a voltage rise rate of 0.1 kV/s, and the voltage value at the time of insulation breakdown was defined as a withstand voltage. The samples were replaced and the measurement was repeated 10 times, and the average value of the results was proportionally distributed to the thickness obtained in the section (1) and converted into a value per 12 um and defined as the withstand voltage of the microporous membrane. For example, when a microporous membrane having a thickness of 10 um is measured and the band voltage is 1 kV, the value in terms of 12 um is 1.2 kV.

In the measurement of the withstand voltage, since the withstand voltage is affected by the dew point, the measurement was performed by the above method under the condition with the dew point of 0 to -15°C.

(12) [Test of resistance to short-circuiting]

The resistance to short-circuiting was evaluated using a table-top type universal testing instrument AUTOGRAPH AGS-X (manufactured by Shimadzu Corporation). A sample laminate in which a polypropylene insulator (thickness: 0.2 mm), a negative electrode for a lithium ion battery (total thickness: about 140 um, base material: copper foil (thickness: about 9 pm), active material: artificial graphite (particle diameter: about 30 pm), double-side coated), a separator, and an aluminum foil (thickness: about 0.1 mm) were laminated in this order was fixed to a compression jig (lower side) of a universal testing machine with a double-sided tape. Next, the aluminum foil and the negative electrode of the sample laminate were connected to a circuit including a capacitor and a clad resistor with cables. The capacitor was charged to about 1.5 V, and metal spheres (material: chromium (SUJ-2)) having a diameter of about 500 um were placed between the separator and the aluminum foil in the sample laminate. A compression jig was attached to a universal testing machine, a sample laminate containing metal spheres was placed between both compression jigs, the sample laminate was compressed at a speed of 0.3 mm/min while monitoring the value of a current flowing through the circuit, and the test was terminated when a load reached 100 N. At this time, a point at which an inflection point appeared when observed over time in the thickness change in the compression direction was defined as a rupture point of the separator, and a moment at which a current was detected in the circuit via the metal spheres was defined as a short-circuiting occurrence point. Regarding the compressive displacement A(t) of the thickness of the microporous membrane when the separator was ruptured by compression to generate an inflection point in compressive stress, and the compressive displacement B(t) of the thickness of the microporous membrane at the moment when a current flowed through the circuit, when the numerical value determined by B(t)/A(t) was 1.1 or more, this means that insulation was maintained even when the separator was broken by foreign matter mixed in the battery, and therefore the resistance to short-circuiting was regarded as excellent. On the other hand, when the numerical value was more than 1.0 and less than 1.1, although rupture of the separator and a short circuit did not occur at the same time, a certain level or more of resistance was required in order not to cause a short circuit even in tension applied during winding of the battery member or in an increase in battery internal pressure due to expansion of the electrode during charging and discharging, and therefore the resistance to short-circuiting was regarded as good. When the numerical value was 1.0, a short circuit occurred at the same time as the rupture of the separator, and the resistance to short-circuiting was regarded as poor.

(13) [Membrane rupture temperature (°C)]

A multilayer microporous membrane having a size of 5 cm × 5 cm is sandwiched from above and below with a set of blocks having a circular opening with a diameter of 12 mm such that the microporous membrane is exposed to the opening. A sphere made of tungsten carbide with a diameter of 10 mm is placed on the multilayer microporous membrane at the circular opening, and the multilayer microporous membrane is heated at a temperature rising rate of 5°C/min. A temperature at which the multilayer microporous membrane is melted and ruptured is defined as a membrane rupture temperature.

(14) [Ratio of layers]

The ratio of the layers of a polyolefin multilayer microporous membrane was observed using a transmission electron microscope (TEM) under the following measurement conditions.

Measurement conditions

- Sample adjustment: A polyolefin multilayer microporous membrane is stained with ruthenium tetroxide and cut with an ultramicrotome to expose a cross section.
- Measuring apparatus: Transmission electron microscope (JEM-1400Plus manufactured by JEOL Ltd.)
- Observation conditions: Acceleration voltage: 100 kV
- Observation direction: TD/ZD. (ZD: membrane thickness direction).

(15) [Weight average molecular weight (Mw)/molecular weight distribution (MwD)]

The weight average molecular weight (Mw) and the molecular weight distribution (MwD) of a polyolefin resin were determined by gel permeation chromatography (GPC) under the following conditions:

- Measuring apparatus: GPC-150C manufactured by Waters Corporation
- Column: Shodex UT806M manufactured by Showa Denko K.K.
- Column temperature: 135°C
- Solvent (mobile phase): o-Dichlorobenzene
- Solvent flow rate: 1.0 ml/minute
- Sample concentration: 0.1 mass% (dissolution condition: 135°C/1 h)
- Injection amount: 500 ul
- Detector: Differential refractometer manufactured by Waters Corporation (RI detector)
- Calibration curve: Created using a polyethylene conversion constant (0.46) from the calibration curve obtained by using monodispersed polystyrene standard sample.

(16) Analysis of MD or TD of polyolefin microporous membrane

In a polyolefin microporous membrane, MD or TD is determined by the following procedures.

When a polyolefin microporous membrane is obtained from a battery, the battery winding direction (longitudinal direction) is MD, and even in a stack type, the longitudinal direction is MD.

In addition, in the case of a rectangular cut film, the heat shrinkage rate is measured, and MD is a direction in which the heat shrinkage rate is higher among a direction in which two sides parallel to each other among four sides of the cut film extend and a direction in which two sides orthogonal to those two sides extend. In the case of a circular cut film, MD is a direction having the highest heat shrinkage rate among radial directions extending radially from the center of the circle. The reason for this is that, in the production process of a polyolefin microporous membrane, as described in the following section, a larger residual stress remains in MD even after the last heat treatment step because the membrane is formed with application of tension in MD. The heat shrinkage rate was measured by the following method.

Heat shrinkage rate

A polyolefin microporous membrane was cut into 95 × 95 mm, and placed in an oven at 40°C for 24 hours. For the polyolefin microporous membrane before and after placing in the oven, the lengths of the two sides of MD and TD are measured, and a value calculated by the following formula is referred to as a heat shrinkage rate.

Formula: Heat shrinkage rate = [(length of one side before placing in oven - length of one side after placing in oven) / (length of one side before placing in oven)] × 100.

(17) Analysis of monolayer or multilayer polyolefin microporous membrane

The identity of a polyolefin microporous membrane can be determined by focusing on a component(s) contained in a layer or layers and analyzing the distribution of the components in the thickness direction.

For example, a catalyst is used for polyolefin polymerization, and the distribution analysis can be performed by focusing on the catalyst remaining in a porous membrane. In this case, the surface of the microporous membrane is analyzed in the thickness direction (MD/ZD or TD/ZD) surface by secondary ion mass spectrometry (SIMS) to determine the concentration distribution of trace metal elements from the catalyst. When the metal elements are uniformly distributed over the TD/ZD surface, the microporous membrane can be determined to comprise a single layer, whereas when there is difference in metal species or the concentration distribution of the metal elements is observed, the microporous membrane can be determined to comprise multiple layers.

Measurement conditions

- Sample adjustment: A polyolefin microporous membrane is cut with an ultramicrotome along a TD/ZD surface to expose a cross section.
- Measuring apparatus: NanoSIMS 50L (manufactured by CAMERA)
- Vacuum degree: $1.33 \times 10^{-8}$ Pa
- Primary ion: O$^-$
- Primary ion acceleration voltage: 25 kV
- Secondary ion polarity: positive
- Secondary ion detection area: $300 \times 300 \ \mu m^2$

In another method, a polyolefin microporous membrane is edged to separate the surface component from the inner layer component. The molecular weight distribution, the melting point, and the absorption spectrum at each position are measured. When the surface layer and the inner layer have equivalent analysis results, the microporous membrane can be determined to comprise a single layer, whereas when difference in analysis result is observed between the surface layer and the inner layer, the microporous membrane can be determined to comprise multiple layers. The molecular weight distribution and the melting point are obtained by the GPC and DSC analysis described above, and the absorption spectrum is obtained by the following method.

Absorption spectrum

The absorption spectrum of a polyolefin microporous membrane was determined by infrared absorption spectrometry (IR) analysis.

Measurement conditions

- Measuring apparatus: FT-720 manufactured by HORIBA, Ltd.
- Measurement mode: Single measurement (transmission method)
- Detector: MeT
- Scan speed: 5 kHz
- Number of integrations: 64 times
- Resolution: 4 cm$^{-1}$
- Measurement wavelength: 600 to 4000 cm$^{-1}$(18) Removal of porous layer of laminated polyolefin multilayer microporous membrane

In the case where the resin component in the porous layer of the battery separator including the polyolefin multilayer microporous membrane and the porous layer laminated thereon is soluble, the separator is washed with a solvent that can dissolve the resin component, dried, and followed by confirmation that the porous layer has been removed, affording the polyolefin multilayer microporous membrane, and then physical properties thereof may be measured. The air permeation resistance of the polyolefin multilayer microporous membrane may be measured, for example, as follow. A cross-sectional SEM of the battery separator is photographed and the thickness of the porous layer in the battery separator is measured. By the thickness of the porous layer, the porous layer is then physically removed by etching or the like using electron beams, followed by washing, thereby affording the polyolefin multilayer porous membrane, and then the measurement is conducted.

[Example 1]

(1) Adjustment of solution for layer A

A raw material obtained by dry-blending 0.2 mass% of tetrakis(methylene-3-(3,5-di-tert-butyl-4-hydroxyphenyl)-propionate)methane as an antioxidant with 100 mass% of a polyolefin composition composed of 70 mass% of ultrahigh molecular weight polyethylene having a weight average molecular weight Mw of $1.0 \times 10^6$ g/mol and 30 mass% of isotactic polypropylene having a weight average molecular weight Mw of $2.6 \times 10^6$ g/mol and a molecular weight distribution MWD (Mw/MD) of 6 shown in Table 1 was charged into a twin-screw extruder. Liquid paraffin was further fed from a side feeder of the twin screw-extruder, and the mixture was mixed in the twin-screw extruder such that the polyolefin composition accounted for 20 mass% and the liquid paraffin accounted for 80 mass%, and the mixture was melt-kneaded. Thus, a polyolefin solution for layer A was prepared.

(2) Adjustment of solution for layer B

A raw material obtained by dry-blending 0.2 mass% of tetrakis(methylene-3-(3,5-di-tert-butyl-4-hydroxyphenyl)-propionate)methane as an antioxidant with 100 mass% of a polyolefin composition composed of 80 mass% of ultrahigh molecular weight polyethylene having a weight average molecular weight Mw of $1.5 \times 10^6$ g/mol and 20 mass% of polyethylene having a weight average molecular weight of $1.0 \times 10^5$ g/mol and a melting point of 132.5°C shown in Table 1 was charged into a twin-screw extruder. Liquid paraffin was further fed from a side feeder of the twin-screw extruder, and the mixture was mixed in the twin-screw extruder such that the polyolefin composition accounted for 20 mass% and the liquid paraffin accounted for 80 mass%, and the mixture was melt-kneaded. Thus, a polyolefin solution for layer B was prepared. (3) Formation of gel-like multilayer sheet
The respective solutions were fed from the twin-screw extruders to a three-layer T-die, and extruded such that layer B solution/layer A solution/layer B solution had a layer thickness ratio of 35/30/35. The extrudate was cooled while being taken up at a take-up speed of 4 m/min with a cooling roll temperature-controlled to 25°C, thereby forming a gel-like three-layer sheet.

(4) First stretching, removal of membrane formation assistants, and drying

The gel-like three-layer sheet was subjected to simultaneous biaxial stretching at 115°C to 5 magnifications in both MD and TD with a tenter stretching machine, then held in the tenter stretching machine to fix the sheet width, and heat-fixed at a temperature of 110°C. Subsequently, the stretched gel-like three-layer sheet was immersed in a methylene chloride bath in a washing tank to remove liquid paraffin, and then air-dried at room temperature.

(5) Second stretching, heat treatment

Thereafter, the sheet was preheated at 127°C, then stretched 1.6 magnifications in TD with a tenter stretching machine, then relaxed by 15% in TD, and heat-fixed at 127°C while being held in the tenter, affording a polyolefin multilayer microporous membrane. The characteristics of the resulting polyolefin multilayer microporous membrane are shown in Table 1.

[Example 2]

A polyolefin multilayer microporous membrane was obtained in the same manner as in Example 1 except that the layer thickness ratio of the gel-like multilayer sheet was 42/16/42, the first stretching temperature was 116°C, the second stretching temperature was 124°C, and the relaxation temperature was 128°C.

[Example 3]

A polyolefin multilayer microporous membrane was obtained in the same manner as in Example 1 except that a polyolefin composition composed of 80 mass% of ultrahigh molecular weight polyethylene having an Mw of $1.0 \times 10^6$ and 20 mass% of isotactic polypropylene was used in the adjustment of the solution for layer A and the first stretching temperature was 113°C.

[Example 4]

Extrusion was performed with a layer configuration of the gel-like multilayer sheet being layer A solution/layer B solution/layer A solution and with a layer thickness ratio of 15/70/15. A polyolefin multilayer microporous membrane was obtained in the same manner as in Example 3 except that the first stretching temperature was 112°C.

[Example 5]

A polyolefin multilayer microporous membrane was obtained in the same manner as in Example 1 except that the layer A, the layer B, the entire body, and the production conditions were as summarized in Table 1.

[Example 6]

A polyolefin multilayer microporous membrane was obtained in the same manner as in Example 5 except that a polyolefin composition composed of 80 mass% of ultrahigh molecular weight polyethylene and 20 mass% of polyethylene having an Mw of $1.0 \times 10^5$ was used in the adjustment of the solution for layer B, the layer configuration of the gel-like multilayer sheet was layer A solution/layer B solution/layer A solution, extrusion was performed at a layer thickness ratio of 20/60/20, the first stretching temperature was 115°C, and the second stretching temperature and the relaxation temperature were 129°C.

[Example 7]

A polyolefin multilayer microporous membrane was obtained in the same manner as in Example 6 except that a polyolefin composition composed of 100 mass% of ultrahigh molecular weight polyethylene was used in the adjustment of the solution for layer B, the resin concentration of the melt-kneaded product was 17 mass%, and the second stretching temperature and the relaxation temperature were 127°C.

[Example 8]

A polyolefin multilayer microporous membrane was obtained in the same manner as in Example 6 except that a polyolefin composition composed of 90 mass% of ultrahigh molecular weight polyethylene having an Mw of $1.6 \times 10^6$

and 10 mass% of isotactic polypropylene was used in the adjustment of the solution for layer A, the Mw of the ultrahigh molecular weight polyethylene in the polyolefin composition was $1.6 \times 10^6$ in the adjustment of the solution for layer B, and the second stretching temperature and the relaxation temperature were 127 °C.

[Example 9]

A binder polymer solution was prepared by putting 5 mass% of a polyvinylidene fluoride-hexafluoropropylene copolymer (PVdF-HFP) polymer in acetone and dissolving it at 50°C for about 12 hours or more. An $Al_2O_3$ powder was added to the produced binder polymer solution such that a mass ratio of binder polymer/$Al_2O_3$ was 10/90, and the $Al_2O_3$ powder was pulverized and dispersed using a ball mill for 12 hours or more. Thus, a coating dispersion liquid for a porous layer was produced. The $Al_2O_3$ particle size of the coating dispersion liquid for a porous layer thus produced was about 400 nm. Both surfaces of the polyolefin multilayer microporous membrane obtained in Example 1 were coated with the thus-produced coating dispersion liquid for a porous layer by dip coating, and after the coating, the solvent was dried with a dryer, forming a porous layer. The thickness of each of the porous layers was set to about 3 um.

The porous layers of the laminated polyolefin multilayer microporous membrane was subjected to peeling treatment. The laminated polyolefin multilayer microporous membrane was placed in a water/acetone = 50/50 wt% solution, washed with ultrasonic waves for 1 hour, and dried for 30 minutes. Then, it was confirmed by cross-sectional SEM that the porous layers had been removed. Thus, a polyolefin multilayer microporous membrane was obtained, and each physical property was measured.

[Comparative Example 1]

A polyolefin multilayer microporous membrane was obtained in the same manner as in Example 8 except that a polyolefin composition composed of 8 mass% of ultrahigh molecular weight polyethylene having an Mw of $2.0 \times 10^6$, 90 mass% of polyethylene having an Mw of $3.5 \times 10^5$, and 2 mass% of polypropylene having an Mw of $5.3 \times 10^5$ was used in the adjustment of the solution for layer A, the resin concentration of the melt-kneaded product was 30%, and a polyolefin resin composition composed of 92 mass% of polyethylene having an Mw of $3.5 \times 10^5$ and 8 mass% of polypropylene having an Mw of $5.3 \times 10^5$ was used in the adjustment of the solution for layer B, the resin concentration of the melt-kneaded product was 35 mass%, the thickness of each layer was 30/40/30, the second stretching temperature and the relaxation temperature were 125°C, the second stretching magnification was 1.0, and the relaxation rate was 0%.

[Comparative Example 2]

A polyolefin multilayer microporous membrane was obtained in the same manner as in Comparative Example 1 except that a polyolefin composition composed of 80 mass% of polyethylene having an Mw of $3.5 \times 10^5$ and 20 mass% of polypropylene having an Mw of $2.6 \times 10^6$ was used in the adjustment of the solution for layer A, the resin concentration of the melt-kneaded product was 25 mass%, and a polyolefin composition composed of 40 mass% of ultrahigh molecular weight polyethylene having an Mw of $2.0 \times 10^6$ and 60 mass% of polyethylene having an Mw of $3.5 \times 10^5$ was used in the adjustment of the solution for layer B, the resin concentration of the melt-kneaded product was 23 mass%, the second stretching temperature and the relaxation temperature were 128°C, and the second stretching magnification was 1.6.

[Comparative Example 3]

A polyolefin microporous membrane was obtained in the same manner as in Comparative Example 2 except that a polyolefin composition composed of 15 mass% of ultrahigh molecular weight polyethylene having an Mw of $2.0 \times 10^6$, 75 mass% of polyethylene having an Mw of $3.5 \times 10^5$, and 10 mass% of isotactic polypropylene having an Mw of $2.6 \times 10^6$ was used in the adjustment of the solution for layer A, the resin concentration of the melt-kneaded product was 25 mass%, the layering arrangement of the gel-like sheet was only layer A, the second stretching magnification was 1.41 in TD, and the relaxation rate was 14%.

[Comparative Example 4]

In the adjustment of the solution for layer A, a polyolefin composition composed of 20 mass% of ultrahigh molecular weight polyethylene having an Mw of $1.0 \times 10^6$, 60 mass% of polyethylene having an Mw of $3.5 \times 10^5$, and 20 mass% of polypropylene having an Mw of $8.0 \times 10^5$ is used, and the resin concentration of the melt-kneaded product is set to 38%. In the adjustment of the solution for layer B, a polyolefin composition composed of 35 mass% of ultrahigh molecular weight polyethylene having an Mw of $1.0 \times 10^6$, 60 mass% of polyethylene having an Mw of $3.5 \times 10^5$, and 5 mass% of polypropylene having an Mw of $8.0 \times 10^5$ was used, and the resin concentration of the melt-kneaded product was set to 42 mass%. A polyolefin multilayer microporous membrane was obtained in the same manner as in Comparative Example 1 except that the gel-like multilayer sheet was extruded at a layer thickness ratio of 22/56/22, then simultaneously biaxially stretched at a first stretching temperature of 120°C to 5 magnifications in MD and 9 magnifications in TD, stretched at a second stretching temperature of 128°C to 1.5 magnifications in TD, and relaxed at a relaxation temperature after the second stretching of 130°C to a relaxation rate of 7%.

[Table 1-1]

| | | | Example 1 | Example 2 | Example 3 | Example 4 | Example 5 | Example 6 | Example 7 | Example 8 | Example 9 |
|---|---|---|---|---|---|---|---|---|---|---|---|
| Layer A | UHMWPE | Molecular weight Mw ($\times 10^4$) | 100 | 100 | 100 | 100 | 150 | 150 | 150 | 160 | 100 |
| | | Content (mass%) | 70 | 70 | 80 | 80 | 90 | 90 | 90 | 90 | 70 |
| | HDPE | Molecular weight Mw ($\times 10^4$) | - | - | - | - | - | - | - | - | - |
| | | Content (mass%) | - | - | - | - | - | - | - | - | - |
| | PP | Molecular weight Mw ($\times 10^4$) | 260 | 260 | 260 | 260 | 260 | 260 | 260 | 260 | 260 |
| | | Content (mass%) | 30 | 30 | 20 | 20 | 10 | 10 | 10 | 10 | 30 |
| | Resin concentration (mass%) of melt-kneaded product | | 20 | 20 | 20 | 20 | 20 | 20 | 20 | 20 | 20 |
| Layer B | UHMWPE | Molecular weight Mw ($\times 10^4$) | 150 | 150 | 150 | 150 | 150 | 150 | 150 | 160 | 150 |
| | | Content (mass%) | 80 | 80 | 80 | 80 | 70 | 80 | 100 | 80 | 80 |
| | HDPE | Molecular weight Mw ($\times 10^4$) | 10 | 10 | 10 | 10 | 10 | 10 | - | 10 | 10 |
| | | Content (mass%) | 20 | 20 | 20 | 20 | 30 | 20 | - | 20 | 20 |
| | PP | Molecular weight Mw ($\times 10^4$) | - | - | - | - | - | - | - | - | - |
| | | Content (mass%) | - | - | - | - | - | - | - | - | - |
| | Resin concentration (wt%) of melt-kneaded product | | 20 | 20 | 20 | 20 | 20 | 20 | 17 | 20 | 20 |

(continued)

| | | | Example 1 | Example 2 | Example 3 | Example 4 | Example 5 | Example 6 | Example 7 | Example 8 | Example 9 |
|---|---|---|---|---|---|---|---|---|---|---|---|
| Entire body | Layer configuration | | B/A/B | B/A/B | B/A/B | A/B/A | B/A/B | A/B/A | A/B/A | A/B/A | B/A/B |
| | Layer thickness ratio | | 35/30/35 | 42/16/42 | 35/30/35 | 15/70/15 | 30/40/30 | 20/60/20 | 20/60/20 | 20/60/20 | 35/30/35 |
| Production conditions | First stretching | Temperature (°C) | 115 | 116 | 113 | 112 | 114 | 115 | 115 | 115 | 115 |
| | | Area magnification | 5×5 | 5×5 | 5×5 | 5×5 | 5×5 | 5×5 | 5×5 | 5×5 | 5×5 |
| | Second stretching | Temperature (°C) | 127 | 124 | 127 | 127 | 123 | 129 | 127 | 127 | 127 |
| | | Magnification (TD) | 1.6 | 1.6 | 1.6 | 1.6 | 1.6 | 1.6 | 1.6 | 1.6 | 1.6 |
| | Relaxation temperature (°C) after second stretching | | 127 | 128 | 127 | 127 | 126 | 129 | 127 | 127 | 127 |
| | Relaxation rate (%) | | 15 | 15 | 15 | 15 | 15 | 15 | 15 | 15 | 15 |

[Table 1-2]

| | Example 1 | Example 2 | Example 3 | Example 4 | Example 5 | Example 6 | Example 7 | Example 8 | Example 9 |
|---|---|---|---|---|---|---|---|---|---|

| | | | Example 1 | Example 2 | Example 3 | Example 4 | Example 5 | Example 6 | Example 7 | Example 8 | Example 9 |
|---|---|---|---|---|---|---|---|---|---|---|---|
| Physical properties | Membrane thickness (μm) | | 12.0 | 7.0 | 12.0 | 12.0 | 7.0 | 12.0 | 12.0 | 12.0 | 12.0 |
| | Air permeation resistance (sec/100 cm$^3$) | | 180 | 102 | 143 | 120 | 81 | 120 | 105 | 145 | 191 |
| | Porosity (%) | | 43 | 43 | 45 | 46 | 43 | 43 | 48 | 44 | 42 |
| | Puncture strength (mN) | | 3695 | 2234 | 3763 | 3724 | 2401 | 3969 | 4067 | 3567 | 3695 |
| | Tensile strength (MPa) | MD | 158 | 157 | 158 | 162 | 161 | 149 | 160 | 145 | 158 |
| | | TD | 179 | 166 | 188 | 178 | 177 | 174 | 184 | 167 | 179 |
| | | MD+TD | 337 | 323 | 346 | 340 | 338 | 323 | 344 | 312 | 337 |
| | Tensile elongation (%) | MD | 175 | 157 | 173 | 175 | 149 | 175 | 159 | 202 | 175 |
| | | TD | 157 | 156 | 164 | 164 | 147 | 149 | 144 | 174 | 157 |
| | | MD+TD | 332 | 313 | 337 | 339 | 296 | 324 | 303 | 376 | 332 |
| | Toughness (MPa%) | | 55753 | 50545 | 58166 | 57542 | 50008 | 52001 | 51936 | 58348 | 55753 |
| | Melting endothermic amount ratio | $(\Delta H1-\Delta H2)/\Delta H2\times100$ | 21 | 23 | 25 | 28 | 26 | 27 | 32 | 22 | 21 |
| | Shutdown temperature (°C) | | 139 | 138 | 138 | 138 | 138 | 136 | 142 | 137 | 139 |
| | Meltdown temperature (°C) | | 177 | 177 | 178 | 175 | 171 | 171 | 174 | 174 | 177 |
| | Mean flow pore diameter (nm) | | 26 | 32 | 29 | 28 | 33 | 38 | 35 | 29 | 25 |
| | Maximum flow rate diameter (nm) | | 44 | 47 | 45 | 43 | 48 | 55 | 55 | 45 | 43 |
| | Maximum flow diameter - mean flow pore diameter (nm) | | 18 | 15 | 16 | 15 | 15 | 17 | 20 | 16 | 18 |
| | Withstand voltage (kV) | | 1.81 | 1.79 | 1.83 | 1.79 | 1.84 | 1.74 | 1.63 | 1.72 | 1.81 |
| | Membrane rupture temperature (°C) | | 191 | 176 | 185 | 180 | 171 | 153 | 153 | 153 | 191 |
| | Membrane thickness change rate (%) after heat compression | | 11 | 9 | 10 | 12 | 11 | 10 | 12 | 8 | 11 |
| | Resistance to short-circuiting | | Excellent | Excellent | Excellent | Excellent | Excellent | Excellent | Excellent | Excellent | Excellent |

EP 4 375 059 A1

[Table 2]

| | | | Comparative Example 1 | Comparative Example 2 | Comparative Example 3 | Comparative Example 4 |
|---|---|---|---|---|---|---|
| Layer A | UHMWPE | Molecular weight Mw ($\times 10^4$) | 200 | - | 200 | 100 |
| | | Content (mass%) | 8 | - | 15 | 20 |
| | HDPE | Molecular weight Mw ($\times 10^4$) | 35 | 35 | 35 | 35 |
| | | Content (mass%) | 90 | 80 | 75 | 60 |
| | PP | Molecular weight Mw ($\times 10^4$) | 53 | 260 | 260 | 80 |
| | | Content (mass%) | 2 | 20 | 10 | 20 |
| | Resin concentration (mass%) of melt-kneaded product | | 30 | 25 | 25 | 38 |
| Layer B | UHMWPE | Molecular weight Mw ($\times 10^4$) | - | 200 | - | 100 |
| | | Content (mass%) | - | 40 | - | 35 |
| | HDPE | Molecular weight Mw ($\times 10^4$) | 35 | 35 | - | 35 |
| | | Content (mass%) | 92 | 60 | - | 60 |
| | PP | Molecular weight Mw ($\times 10^4$) | 53 | - | - | 80 |
| | | Content (mass%) | 8 | - | - | 5 |
| | Resin concentration (wt%) of melt-kneaded product | | 35 | 23 | - | 42 |
| Entire body | Layer configuration | | A/B/A | A/B/A | A | A/B/A |
| | Layer thickness ratio | | 30/40/30 | 10/80/10 | 100 | 22/56/22 |
| Production conditions | First stretching | Temperature (°C) | 115 | 115 | 115 | 120 |
| | | Area magnification | 5×5 | 5×5 | 5×5 | 9×5 |
| | Second stretching | Temperature (°C) | 125 | 128 | 128 | 128 |
| | | Magnification (TD) | 1.0 | 1.6 | 1.41 | 1.5 |
| | Relaxation temperature (°C) after second stretching | | 125 | 128 | 129 | 130 |
| | Relaxation rate (%) | | 0 | 0 | 14 | 7 |

(continued)

| | | | Comparative Example 1 | Comparative Example 2 | Comparative Example 3 | Comparative Example 4 |
|---|---|---|---|---|---|---|
| Physical properties | Membrane thickness ($\mu$m) | | 20.0 | 11.5 | 12.0 | 18.0 |
| | Air permeation resistance (sec/100 cm$^3$) | | 320 | 145 | 140 | 400 |
| | Porosity (%) | | 39 | 46 | 39 | 41 |
| | Puncture strength (mN) | | 3361 | 3626 | 2832 | 5194 |
| | Tensile strength (MPa) | MD | 134 | 120 | 107 | 214 |
| | | TD | 121 | 175 | 117 | 190 |
| | | MD+TD | 255 | 295 | 224 | 404 |
| | Tensile elongation (%) | MD | 140 | 160 | 143 | 90 |
| | | TD | 220 | 100 | 129 | 96 |
| | | MD+TD | 360 | 260 | 272 | 186 |
| | Toughness (MPa%) | | 45380 | 36700 | 30394 | 37500 |
| | Melting endothermic amount ratio | ($\Delta$H1-$\Delta$H2) /$\Delta$H2$\times$100 | 15 | 17 | 14 | 19 |
| | Shutdown temperature (°C) | | 135 | 135 | 135 | 143 |
| | Meltdown temperature (°C) | | 165 | 168 | 165 | 175 |
| | Mean flow pore diameter (nm) | | 36 | 32 | 43 | 35 |
| | Maximum flow rate diameter (nm) | | 60 | 55 | 81 | 48 |
| | Maximum flow diameter - mean flow pore diameter (nm) | | 24 | 23 | 38 | 13 |
| | Withstand voltage (kV) | | 1.54 | 1.55 | 1.43 | 1.40 |
| | Membrane rupture temperature (°C) | | 150 | 165 | 150 | 165 |
| | Membrane thickness change rate (%) after heat compression | | 15 | 20 | 16 | 13 |
| | Resistance to short-circuiting | | Poor | Poor | Poor | Poor |

## Claims

1. A polyolefin multilayer microporous membrane obtained by laminating a first microporous layer containing polypropylene and polyethylene and a second microporous layer containing polyethylene,
wherein: in a temperature-melting endothermic amount curve obtained through measurement with a differential scanning calorimeter (DSC), ($\Delta$H1 - $\Delta$H2)/$\Delta$H2 $\times$ 100 $\geq$ 20, where $\Delta$H1 is a melting endothermic amount of polyethylene during first melting in a temperature range of 0 to 157°C, and $\Delta$H2 is a melting endothermic amount of polyethylene during second melting; when a content of the polyolefin in the first microporous layer is 100 mass% in AFM-IR measurement of a cross section of the polyolefin multilayer microporous membrane, a content ratio of the polypropylene in the first microporous layer is 10 mass% or more and 50 mass% or less; and the porosity is 35% or more and 70% or less.

2. The polyolefin multilayer microporous membrane according to claim 1, wherein a toughness calculated by the following Formula 1 is 41000 (MPa•%) or more and 100000 (MPa•%) or less, and a sum of a tensile rupture strength in MD and a tensile rupture strength in TD is 280 MPa or more.

Toughness = MD tensile rupture strength (MPa) × MD tensile rupture elongation (%) + TD tensile rupture strength (MPa) × TD tensile rupture elongation (%)    Formula 1

3. The polyolefin multilayer microporous membrane according to claim 1 or 2, wherein a mean flow pore diameter determined using a Perm Porometer is 10 nm or more and less than 30 nm, and a pore diameter distribution value obtained by subtracting the mean flow pore diameter from a maximum flow pore diameter is less than 20 nm.

4. The polyolefin multilayer microporous membrane according to claim 1 or 2, wherein the polyolefin multilayer microporous membrane has a withstand voltage of 1.5 kV/12 um or more.

5. The polyolefin multilayer microporous membrane according to claim 3, wherein the polyolefin multilayer microporous membrane has a withstand voltage of 1.5 kV/12 um or more.

6. A laminated polyolefin multilayer microporous membrane comprising the polyolefin multilayer microporous membrane according to claim 1 and one or more porous layers provided on at least one surface of the polyolefin multilayer microporous membrane.

7. A battery separator comprising the polyolefin multilayer microporous membrane according to claim 1.

## INTERNATIONAL SEARCH REPORT

| International application No. |
| --- |
| **PCT/JP2022/025911** |

**A. CLASSIFICATION OF SUBJECT MATTER**

*B32B 5/18*(2006.01)i; *B32B 27/32*(2006.01)i; *H01M 50/417*(2021.01)i; *H01M 50/449*(2021.01)i; *H01M 50/489*(2021.01)i; *H01M 50/491*(2021.01)i; *H01M 50/494*(2021.01)i
FI: B32B5/18; B32B27/32 E; H01M50/417; H01M50/449; H01M50/491; H01M50/494; H01M50/489

According to International Patent Classification (IPC) or to both national classification and IPC

**B. FIELDS SEARCHED**

Minimum documentation searched (classification system followed by classification symbols)
B32B5/18; B32B27/32; H01M50/417; H01M50/449; H01M50/489; H01M50/491; H01M50/494

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2015/194667 A1 (TORAY BATTERY SEPARATOR FILM CO., LTD.) 23 December 2015 (2015-12-23)<br>claims, paragraph [0120], table 2 | 1-7 |
| A | WO 2007/010878 A1 (TONEN CHEMICAL CORP.) 25 January 2007 (2007-01-25)<br>claims, paragraph [0154], table 1 | 1-7 |
| A | WO 2015/170653 A1 (TORAY BATTERY SEPARATOR FILM CO., LTD.) 12 November 2015 (2015-11-12)<br>claims, paragraph [0170], table 1 | 1-7 |
| A | WO 2019/093184 A1 (TORAY INDUSTRIES, INC.) 16 May 2019 (2019-05-16)<br>claims, paragraph [0105], table 2 | 1-7 |
| A | JP 2013-517152 A (TORAY BATTERY SEPARATOR FILM CO., LTD.) 16 May 2013 (2013-05-16)<br>claims, paragraph [0096], table 1-1 | 1-7 |

☑ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **24 August 2022** | **06 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/025911** |

**C.     DOCUMENTS CONSIDERED TO BE RELEVANT**

| Category* | Citation of document, with indication, where appropriate, of the relevant passages | Relevant to claim No. |
| --- | --- | --- |
| A | JP 2013-126765 A (ASAHI KASEI E-MATERIALS CORP.) 27 June 2013 (2013-06-27) claims, paragraph [0035], table 1 to paragraph [0037], table 3 | 1-7 |
| A | WO 2020/149294 A1 (TORAY INDUSTRIES, INC.) 23 July 2020 (2020-07-23) | 1-7 |
| A | WO 2015/182689 A1 (TORAY BATTERY SEPARATOR FILM CO., LTD.) 03 December 2015 (2015-12-03) | 1-7 |
| A | WO 2018/168871 A1 (TORAY INDUSTRIES, INC.) 20 September 2018 (2018-09-20) | 1-7 |
| A | WO 2018/168835 A1 (TORAY INDUSTRIES, INC.) 20 September 2018 (2018-09-20) | 1-7 |

**INTERNATIONAL SEARCH REPORT**
Information on patent family members

International application No.

**PCT/JP2022/025911**

| Patent document cited in search report | | | Publication date (day/month/year) | Patent family member(s) | | | Publication date (day/month/year) |
|---|---|---|---|---|---|---|---|
| WO | 2015/194667 | A1 | 23 December 2015 | US | 2017/0125766 | A1 | |
| | | | | claims, table 2 | | | |
| | | | | EP | 3159163 | A1 | |
| | | | | KR | 10-2017-0019348 | A | |
| | | | | CN | 107405902 | A | |
| WO | 2007/010878 | A1 | 25 January 2007 | US | 2009/0274955 | A1 | |
| | | | | claims, table 1 | | | |
| | | | | EP | 1905586 | A1 | |
| | | | | CN | 101223031 | A | |
| | | | | KR | 10-2008-0028444 | A | |
| WO | 2015/170653 | A1 | 12 November 2015 | US | 2017/0282513 | A1 | |
| | | | | claims, table 1 | | | |
| | | | | EP | 3141385 | A1 | |
| | | | | CN | 106457804 | A | |
| | | | | KR | 10-2017-0013215 | A | |
| WO | 2019/093184 | A1 | 16 May 2019 | US | 2021/0218108 | A1 | |
| | | | | claims, table 2 | | | |
| | | | | EP | 3708363 | A1 | |
| | | | | CN | 111295285 | A | |
| | | | | KR | 10-2020-0085746 | A | |
| JP | 2013-517152 | A | 16 May 2013 | US | 2013/0045412 | A1 | |
| | | | | claims, table 1 | | | |
| | | | | WO | 2011/086823 | A1 | |
| | | | | EP | 2523747 | A1 | |
| | | | | CN | 102740956 | A | |
| | | | | KR | 10-2012-0116977 | A | |
| JP | 2013-126765 | A | 27 June 2013 | (Family: none) | | | |
| WO | 2020/149294 | A1 | 23 July 2020 | US | 2021/0339449 | A1 | |
| | | | | EP | 3912813 | A1 | |
| | | | | CN | 112512807 | A | |
| | | | | KR | 10-2021-0114330 | A | |
| WO | 2015/182689 | A1 | 03 December 2015 | US | 2017/0149038 | A1 | |
| | | | | EP | 3085531 | A1 | |
| | | | | KR | 10-2016-0094448 | A | |
| | | | | CN | 106029380 | A | |
| WO | 2018/168871 | A1 | 20 September 2018 | US | 2020/0047473 | A1 | |
| | | | | CN | 110382231 | A | |
| | | | | KR | 10-2019-0127690 | A | |
| WO | 2018/168835 | A1 | 20 September 2018 | KR | 10-2019-0088567 | A | |
| | | | | CN | 110249449 | A | |

Form PCT/ISA/210 (patent family annex) (January 2015)

31

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008255307 A
- WO 2014192862 A
- WO 2013146403 A
- JP 2010036355 A
- JP 2019072901 A

- WO 2006106783 A
- JP 2132327 B
- JP 2002256099 A
- WO 2008016174 A
- WO 2007132942 A